# EUROPÄISCHE PATENTSCHRIFT

(11) **EP 2 133 234 B1**
(45) Veröffentlichungstag und Bekanntmachung des Hinweises auf die Patenterteilung: **25.05.2011**
(21) Anmeldenummer: 08010828.5
(22) Anmeldetag: 13.06.2008
(51) Int. Cl.: B60P 7/135, B60P 1/02, B60P 3/42

(54) **Variabler Laderaum zum Transport und/oder zur Lagerung von Waren**
Variable storage space for transport and/or storage of goods
Espace de chargement variable destiné au transport et/ou au stockage de marchandises

(43) Veröffentlichungstag der Anmeldung: 16.12.2009
(73) Patentinhaber: Reichert, Egon Peter, 54295 Trier (DE)
(72) Erfinder: Reichert, Egon Peter, 54295 Trier (DE)
(74) Vertreter: HOFFMANN EITLE

(56) Entgegenhaltungen:
- EP-A- 0 278 339
- EP-A- 0 278 558
- EP-A- 0 763 459
- EP-A- 1 659 023
- WO-A-84/03684
- WO-A-03/016178
- DE-A1- 1 805 668
- DE-U1- 20 002 002
- GB-A- 2 325 894
- NL-C2- 1 001 836
- US-A- 5 788 439

## Beschreibung

### Gebiet der Erfindung

Die Erfindung betrifft einen variablen Laderaum zum Transport und/oder zur Lagerung von Waren, insbesondere zur Verwendung in oder an einem Kraftfahrzeug, vorzugsweise dem Laderaum eines Auflegers, eines Anhängers und jeder Art von Wechselaufbau für einen Lkw, umfassend einen Boden sowie eine umlaufende und mit dem Boden verbundene Wand, und eine Decke, welche zusammen den Laderaum definieren. Die Erfindung ist anwendbar auf jede Art von Schienen- oder Kraftfahrzeugen sowie auf Container wie etwa Luftfracht-Container und See-Container. Ebenso kann die Erfindung sowohl bei stationären als auch bei mobilen Laderäumen Anwendung finden.

### Hintergrund der Erfindung

Insbesondere im Kraftfahrzeugwesen ist die Anwendung von variabel gestalteten Aufbauten für Aufleger von Lkws weit verbreitet. Siehe Z.B. EP 0763459 Sofern keine Norm-Container auf den Aufleger abgesetzt werden, kann der Laderaum regelmäßig durch den Aufund Abbau von mobilen Seitenwänden, durch Vor- oder Zurückziehen einer Abdeckplane, Einfügen von Querstreben und Ladungsstützen und dergleichen variabel gestaltet werden.

Hierdurch wird es möglich, in einem Laderaum mit im Wesentlichen den gleichen Außenabmessungen unterschiedliche Stückgutfrachten, beispielsweise in Kartons verpackte Waren und/oder auf Paletten gestapelte Waren oder aber ein großes Einzelstückgut mit dem gleichen Aufleger transportieren zu können.

Die Variabilität ist dabei zum einen aus Gründen der Ladungssicherung erforderlich, weist darüber hinaus aber auch ökonomische Gründe auf. So ist es insbesondere im Spediteurgewerbe üblich, nach Auslieferung einer Fracht am Bestimmungsort einen neuen Auftrag für die Rückfahrt zum Ursprungsort zu akquirieren. Die Fracht, insbesondere deren Größe und Gewicht sowie deren Beschaffenheit können sich jedoch von der Fracht für die Hinfahrt deutlich unterscheiden, so dass es insbesondere erforderlich ist, die Variabilität der Laderaumänderung mit besonders einfachen Mitteln und in einer möglichst kurzen Zeit bewirken zu können.

Ist die variable Einstellung des Laderaums jedoch nicht so gestaltet, dass nahezu beliebige Waren befördert werden können, sind Leerfahrten zurück zum Ausgangspunkt unumgänglich. Dies ist jedoch weder aus ökonomischen noch aus ökologischen Erwägungen wünschenswert.

Eine große Beschränkung der Variabilität von derartigen Laderäumen besteht insbesondere darin, dass diese generell entweder für Stückgut oder Paletten, oder aber für den Transport von Flüssigkeiten wie etwa Wein, Öle oder dergleichen ausgestaltet sind. Sofern keine besonderen Bestimmungen den Einsatz von besonders geprüften und zertifizierten Druckbehältern erfordern, können diese auch im Laderaum von Fahrzeugen befördert werden, welche üblicherweise für den Transport von Stückgutfracht vorgesehen sind. Dies erfordert jedoch unausweichlich den Einsatz zusätzlicher Speicherbehältnisse für die Flüssigkeiten wie etwa Flaschen, Kanister oder dergleichen. Große Mengen von Flüssigkeiten werden überdies in der Praxis auch in großen Kunststoffblasen mit flexibler Außenhülle und einem Fassungsvolumen von mehr als 1 m³ befördert.

Sämtliche der oben genannten Ansätze zur Erhöhung der Variabilität von Laderäumen im Hinblick auf die Möglichkeit, Stückgut oder Paletten und Flüssigkeiten in einem Laderaum zu befördern, sind jedoch aufwändig und im Hinblick auf das zu befördernde Gewicht und die Handhabbarkeit der Verpackungen nicht vorteilhaft.

EP 0 763 459 A1 offenbart einen Auflieger für einen Lkw zum Transportieren eines flexiblen Tanks mit einer Ladefläche, auf der ein Tank liegt, der aus einem großen Sack aus flexiblem, undurchlässigem Material besteht. Ferner wird eine horizontale Last tragende Plattform oberhalb der Ladefläche vorgesehen, die vertikal zwischen einer angehobenen und einer abgesenkten Position verschiebbar ist.

NL 1 001 836 C2 beschreibt ein Fahrzeug mit einer Ladefläche für feste Güter, die sich knapp oberhalb des Bodens des Fahrzeugs erstreckt und durch ausdehnbare Metallstreifen gehalten wird. Zwischen der Ladefläche und dem Boden des Fahrzeugs ist ein Raum vorgesehen, der von einem flexiblen, flüssigkeitsdichten Material umschlossen ist, in das eine Flüssigkeit gefüllt werden kann.

### Aufgabe der Erfindung

Es war daher eine Aufgabe der Erfindung, einen Laderaum zum Transport und/oder zur Lagerung von Waren unterschiedlicher Art zur Verfügung zu stellen, der gegenüber den im Stand der Technik bekannten Laderäumen eine Verbesserung bezüglich der Flexibilität und Einsatzfähigkeit bereitstellt.

Diese Aufgabe wird durch den Laderaum mit den Merkmalen des Anspruchs 1 gelöst. Vorteilhafte Ausgestaltungen der

Erfindung sind in den abhängigen Ansprüchen 2 bis 15 definiert.

In erfindungsgemäßer Weise wird ein Laderaum zur Verfügung gestellt, der prinzipiell von einem Boden, einer umlaufenden und mit dem Boden verbundenen Wand sowie einer Decke definiert wird. Dabei kann der Abstand zwischen dem Boden und der Decke mittels einer geeigneten Mechanik variiert werden und die Decke wenigstens in einer unteren Position mit der Wand kraft- und formschlüssig sowie flüssigkeitsdicht verbunden werden, um somit einen Tank für eine oder mehrere Flüssigkeiten auszubilden.

Auf dem Boden des Laderaums kann eine flüssigkeitsdichte Wanne oder Folie aufliegen. Bevorzugt wird jedoch, dass keinerlei Zusatzvorrichtung in den Laderaum eingebracht werden muss, um einen Flüssigkeitstank im Laderaum auszubilden.

Die Decke mit variabler Höhe kann dabei eine Länge und/oder Breite aufweisen, die im Wesentlichen mit den Ausmaßen des Bodens korrespondiert, ebenfalls sind aber Ausführungsformen vom Erfindungsgedanken umfasst, bei denen die Decke nur mit Teilbereichen des Bodens überlappt und entsprechend mit Teilen der umlaufenden Wand und gegebenenfalls zusätzlich angeordneten Wandelementen zusammenwirkt, um einen Laderaum für Flüssigkeiten auszubilden.

Die Erfindung ermöglicht den flexiblen Einsatz von Frachträumen sowohl für den Einsatz beim Transport- und/oder der Lagerung von Stückgut oder Paletten als auch zur Beförderung und/oder zur Lagerung von Flüssigkeiten. Dabei wird der Laderaum für Stückgut oder Paletten in der Regel so gestaltet werden, dass die Decke in ihrer obersten Position angeordnet wird, um so einen größtmöglichen Laderaum für das Stückgut oder die Paletten zur Verfügung zu stellen, wobei das Stückgut oder die Paletten dann in üblicher Weise auf dem Boden des Laderaums abgestellt und hier gegebenenfalls fixiert wird. Wenn der Laderaum danach als Tank für Flüssigkeiten genutzt werden soll, wird die Decke bis zu einer unteren Position, bei der sie den Kraft- und Formschluss mit der umlaufenden Wand erzielen kann, herabgesenkt und bildet somit einen Tank aus, dessen Volumen kleiner ist als das Volumen des Laderaums für Stückgut.

Im erfindungsgemäßen Sinne muss sich die umlaufende Wand in ihrer Höhe nicht zwangsläufig bis zur oberen Rückzugsposition der Decke erstrecken. Zur Erzielung des erfindungsgemäßen Vorteils reicht eine umlaufende Wand aus, die sich in ihrer Höhe lediglich vom Boden bis zu einer unteren Position der Decke erstreckt, um hier einen Tank auszubilden, dessen Höhe sich ebenfalls vom Boden bis zur unteren Position der Decke erstreckt. Oberhalb dieser unteren Position ist die Gestaltung der Außenwand des Laderaums im Wesentlichen frei, beispielsweise durch Verwendung von wiederentfernbaren Wandelementen oder von einer oder mehrerer Planen.

Dabei ist es selbstverständlich, dass die Verbindung zwischen Boden und umlaufender Wand das Austreten der gegebenenfalls gespeicherten Flüssigkeit sicher und dauerhaft unterbindet. Ebenso erfolgt die Wahl der Materialien für den Boden, die umlaufende Wand und zumindest der dem Inneren des Laderaums zugewandten Seite der Decke derart, dass keine Wechselwirkung des Materials mit der zu speichernden Flüssigkeit zu erwarten ist.

In einer vorteilhaften Ausgestaltungsform des erfindungsgemäßen Laderaums ist zumindest ein Teil der umlaufenden Wand, insbesondere ein rückwärtiger Teil der Wand, aus der Ruheposition verschwenkbar angebracht. Die verschwenkbare Anbringung kann beispielsweise am Boden erfolgen, wodurch eine Seiten- oder Heckklappe aus der oberen Position nach unten verschwenkt werden kann, um den Zugang zum Laderaum von der Seite oder von hinten ohne Schwierigkeiten zu ermöglichen. Ebenso kann die verschwenkbare Anbringung von Teilen der Wand so gestaltet sein, dass ein seitliches Verschwenken eines oder mehrerer Teile der Wand erfolgen kann, um im Wesentlichen den gleichen Effekt zu erzielen. Gerade bei Aufliegern von Lkws wird eine derartige verschwenkbare Anordnung regelmäßig zumindest im Bereich der Heckklappe verwirklicht werden.

Wie bereits oben angegeben, kann der Kraft- und/oder Formschluss zwischen Wand und Decke in jeder dem Fachmann geläufigen Art und Weise erfolgen. Besonders bevorzugt wird jedoch eine Ausgestaltungsform, bei der die Verspannung über periodisch an der Decke angeordnete und mit dieser verbundene Spannhebel erfolgt, über die die Wand mit der Decke verspannt wird. In einer überaus vorteilhaften Ausgestaltungsform der Erfindung greift ein Spannhaken dabei über die Oberkante der umlaufenden Wand und zieht diese bei Betätigung eines Hebelmechanismus an die umlaufende Kante der Decke heran, um somit bei komplementärer Ausgestaltung der Berührungsflächen zwischen Wand und Decke einen Kraft- und Formschluss zu bewirken.

Es ist generell von Vorteil, wenn die Decke eine im Wesentlichen entlang der Seitenkanten umlaufend angeordnete und zur Wand hin weisende Dichtung aufweist, über die insbesondere der Formschluss zwischen Wand und Decke erzielt werden kann. Bei geeigneter Wahl des Materials und der Form der Dichtung kann ein Austritt der Flüssigkeit aus dem Laderaum auch ohne Einsatz von Spannelementen oder dergleichen bewirkt werden.

In einer weiteren bevorzugten Ausgestaltungsform der Erfindung weist die Decke wenigstens eine verschließbare Öffnung zur Einführung einer oder mehrerer Flüssigkeiten im Laderaum auf. In einer besonders bevorzugten Ausgestaltungsform der Erfindung sind diese verschließbaren Öffnungen in der Form von Tankstutzen mit Deckel ausgestaltet, wie sie bei Tankwagen üblicherweise Verwendung finden. Hierdurch wird die Befüllung des Laderaums mit Flüssigkeiten besonders vorteilhaft erleichtert. Ebenso kann durch die verschließbaren Öffnungen nach dem Löschen der Ladung eine Spülflüssigkeit in den Laderaum eingepumpt werden. Insbesondere bei der Verwendung von zusätzlichen Schwallwänden innerhalb des Laderaums und zur Erleichterung des Spülvorgangs ist eine Verteilung mehrerer derartiger Öffnungen über die gesamte Länge und/oder Breite der Decke vorteilhaft.

In einer weiteren bevorzugten Ausgestaltungsform der Erfindung weist der Boden wenigstens eine verschließbare Öffnung zum Ablassen von im Laderaum gespeicherter Flüssigkeiten auf. Hierdurch wird das Löschen flüssiger Ladung aus dem Laderaum besonders vorteilhaft unterstützt. Ebenso kann durch eine derartige Öffnung die gegebenenfalls eingebrachte Spülflüssigkeit mit besonders einfachen Mitteln wieder aus dem Laderaum entfernt werden.

Wie eingangs erwähnt, wird der Laderaum prinzipiell durch den Boden, eine umlaufende und mit dem Boden verbundene Wand sowie eine Decke definiert. Insbesondere im Fall von Auflegern von Lastkraftwagen oder bei entsprechenden Anhängern wird jedoch gewünscht, dass auch die Außenmaße des Fahrzeugs unabhängig von der Höhenposition der Decke konstant sind. In einer vorteilhaften Ausgestaltungsform der Erfindung ist daher oberhalb der Decke und im Wesentlichen außerhalb des Laderaums eine Abschlussplatte angeordnet, die sich üblicherweise über die gesamte Länge und Breite des Laderaums erstreckt. Zudem wird diese Abschlussplatte üblicherweise mit den Seitenwänden des Laderaums fest und starr verbunden sein.

Die Variierung des Abstands zwischen Decke und Boden kann über jede dem Fachmann geläufige Art erfolgen. Zudem kann die Höhenverstellung allein per Handbetrieb und mittels Muskelkraft oder aber in einer bevorzugten Weise elektrisch, pneumatisch oder hydraulisch zumindest unterstützt erfolgen. In einer besonders bevorzugten Ausgestaltungsform der Erfindung erfolgt die Veränderung des Abstands zwischen Boden und Decke aber vollständig mittels elektrisch, pneumatisch oder hydraulisch bewirkter Kraftübertragung.

Sofern eine obere Abschlussplatte vorgesehen ist, erfolgt das Herabsenken und das Anheben der Decke unter Anwendung eines oder mehreren Scherentisch-Mechanismen, die zwischen der oberen Abschlussplatte und der Decke angeordnet sind. Hierdurch wird ein besonders sicherer Mechanismus zum variablen Einstellen der Höhe der Decke in Bezug auf den Boden bereitgestellt, über den zudem eine besonders planparallele Anordnung der Decke zum Boden hin gewährleistet werden kann.

In einer alternativen und ebenfalls bevorzugten Ausgestaltungsform der Erfindung erfolgt die Veränderung des Abstands zwischen Boden und Decke jedoch mittels wenigstens eines Spindelantriebs. Ganz besonders bevorzugt wirken dabei mit der Decke verbundene Spindelmuttern mit Spindeln zusammen, die entlang der Wand des Laderaums angeordnet sind und sich entlang des Verfahrwegs der Decke erstrecken. In einer überaus bevorzugten Ausgestaltungsform der Erfindung sind die Spindeln dabei drehfest mit der Wand verbunden und die Höhenverstellung erfolgt über eine synchronisierte Drehung der mit der Decke verbundenen Spindelmuttern.

In einer weiteren alternativen und ebenfalls bevorzugten Ausgestaltungsform der Erfindung erfolgt die Höhenverstellung der Decke in Bezug auf den Boden aber mittels wenigstens eines Seilzugs, über den die Höhenverstellung mit besonders einfachen Mitteln bewirkt werden kann. Ganz besonders bevorzugt wird bei Verwendung eines Seilzugs zudem die Anwendung einer oder mehrerer seitlicher Führungen der Decke an der Wand.

In einer weiteren besonders bevorzugten Ausgestaltungsform der Erfindung ist der Laderaum zusätzlich mit einem Kühlsystem verbunden, über das der Inhalt des Laderaums auf eine gewünschte Temperatur und besonders bevorzugt auch auf einen vorab festgelegten Feuchtegehalt der Atmosphäre innerhalb des Laderaums gebracht werden kann. In Anhängern oder Aufliegern von Lastkraftwagen ist ein derartiges Kühlsystem üblicherweise an der Vorderwand des Laderaums angebracht und stellt die Temperatur und/oder den Feuchtegehalt der von außen in den Laderaum hineingeblasenen Luft auf die gewünschten Parameter ein.

Bei Verwendung des Laderaums zum Lagern und/oder Transport von im Wesentlichen trockenen Stückgütern oder Paletten kann die gekühlte Luft direkt in den Laderaum eingebracht werden. Bei Transport und/oder Lagerung von Flüssigkeiten erfolgt die Kühlung aber vorzugsweise dadurch, dass die abgekühlte Luft entlang wenigstens einer Außenseite des Laderaums geführt wird, beispielsweise entlang der dem Laderaum abgewandten Seite der in einer unteren Position angeordneten Decke.

Dies wird mit besonders einfachen konstruktiven Mitteln dadurch erreicht werden können, dass das Kühlsystem und zumindest dessen Einführanschluss in oder an den Laderaum an einer Position angeordnet ist, welche zwischen der oberen Position der Decke und einer unteren Position platziert ist.

### Kurze Beschreibung der Figuren

Die Erfindung wird nunmehr anhand von einigen zeichnerischen Darstellungen näher erläutert werden, welche bevorzugte Ausführungsformen der Erfindung darstellen, nicht jedoch geeignet sind, den Schutzbereich der Erfindung, wie er in den anhängenden Ansprüchen definiert ist, in irgendeiner Weise einzuschränken.

### In den Figuren zeigt

Figur 1 eine Rückansicht eines Aufliegers eines Lkws mit dem erfindungsgemäßen Laderaum zum Transport von Stückgut oder Paletten,
Figur 2 eine Rückansicht des Laderaums aus Figur 1 mit der Decke in einer unteren Position und gemäß einer ersten Ausführungsform,
Figur 3 eine Rückansicht eines erfindungsgemäßen Laderaums in dem Auflieger eines Lkws zum Transport einer Flüssigkeit,
Figur 4 eine zweite Ausführungsform des erfindungsgemäßen Laderaums mit einem Spindelantrieb als HöhenverstellMechanismus,
Figur 5 eine detaillierte Ansicht eines Spindelantriebs gemäß der zweiten Ausführungsform,
Figur 6 eine dritte Ausführungsform des erfindungsgemäßen Laderaums mit einem in einer Lochstange kämmenden Zahnrad als Höhenverstellmechanismus für die Decke,
Figur 7 eine Detailansicht des Zahnrad-Mechanismus gemäß der dritten Ausführungsform,
Figur 8 ein Mechanismus zum Verspannen von Decke und Wand in einer Nichtverspannungs-Position,
Figur 9 den Mechanismus aus Figur 8 in einer Verspannungs-Position,
Figur 10 ein Kühlsystem zur Kühlung des Laderaums beim Transport von Stückgut, und
Figur 11 ein Kühlsystem zur Kühlung des Laderaums beim Transport vom Flüssigkeiten.

### Wege zur Ausführung der Erfindung

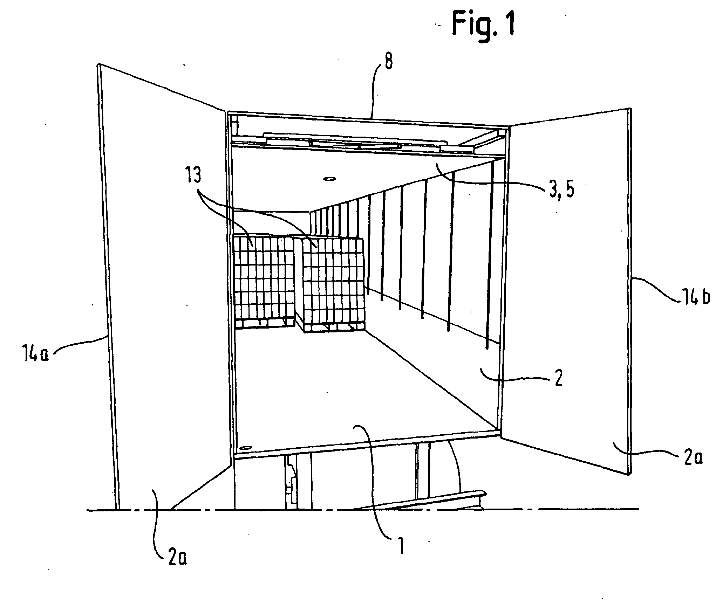

In Figur 1 wird eine Rückansicht eines geöffneten und erfindungsgemäßen Laderaum eines Aufliegers eines Lkws gezeigt, wobei der Laderaum einen Boden 1, eine im Wesentlichen umlaufende Wand 2 sowie eine Decke 3 aufweist, die unterhalb einer oberen Abschlussplatte 8 angebracht ist. Die Decke 3 liegt in der dargestellten ersten Ausführungsform in der oberen Position 5 vor, und schränkt somit das Ladevolumen des Laderaums im Wesentlichen nicht ein. Auf dem Boden 1 sind eine Vielzahl von Normpaletten 13 abgesetzt. Der rückwärtige Teil 2a der umlaufenden Wand 2 wird in der dargestellten Ausführungsform von den zwei in ihrer aufgeklappten Position dargestellten Türen 14a, 14b des Aufliegers gebildet.

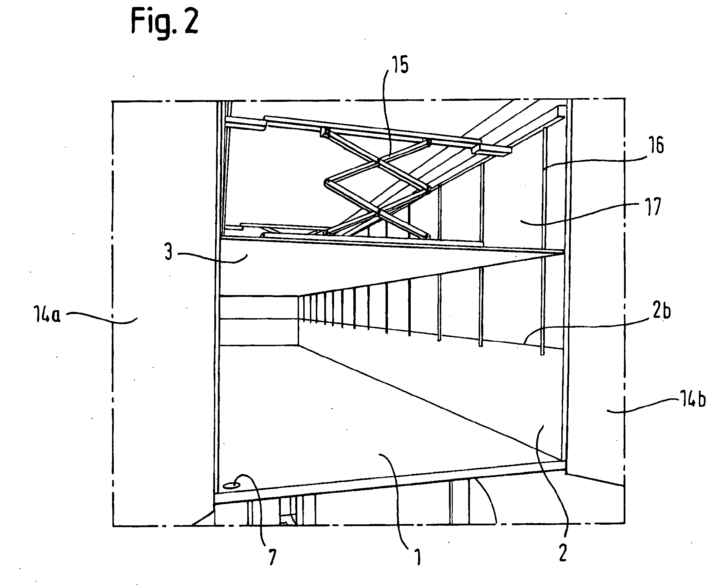

In Figur 2 ist eine weitere Ansicht des Aufliegers aus Figur 1 dargestellt, bei dem die Decke 3 mittels eines Scherentischmechanismus 15 entlang von Führungsstangen 16 planparallel zum Boden 1 in ihre (nicht dargestellte) untere Position verfahren wird, um hier zusammen mit der umlaufenden Wand 2 und den geschlossenen Türen 14a, 14b einen Tank zum Speichern von Flüssigkeiten auszubilden. Die umlaufende Wand 2 erstreckt sich vom Boden 1 bis zu einer Höhe von 85 cm, wobei oberhalb einer umlaufenden Oberkante 2b der Wand 2 Auflieger-Seitenwände 17 angeordnet sind, an die keine speziellen Anforderungen in Bezug auf die Bereitstellung einer flüssigkeitsdichten Einhausung von flüssigem Transportgut gestellt sind. Im Boden 1 des Aufliegers ist darüber hinaus eine Öffnung 7 zum Ablassen von im Laderaum zu speichender Flüssigkeiten oder gegebenenfalls zum Ablassen von nach dem Löschen der Ladung eingebrachter Reinigungsflüssigkeiten vorgesehen. Ganz besonders bevorzugt wird hierbei eine Ausgestaltung, bei der der Boden 1 zu der Öffnung 7 hin leicht abfallend ausgestaltet ist.

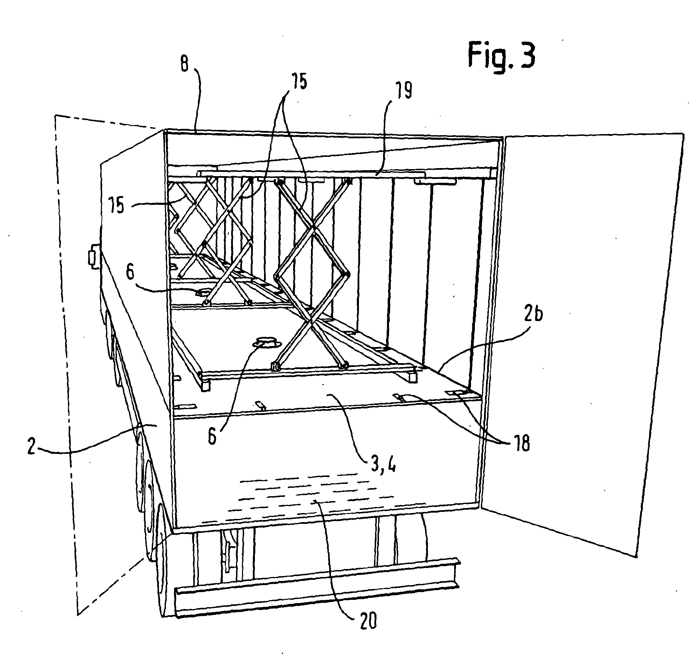

In Figur 3 ist der Auflieger aus den Figuren 1 und 2 in einer Form dargestellt, bei der die Decke 3 in ihren unteren Position 4 angeordnet ist und bei der eine Vielzahl von Spannhebel-Mechanismen 18, die auf der Oberseite der Decke 3 angebracht sind, um die umlaufende Kante 2b der Wand 2 umgreifen und so eine flüssigkeitsdichte, kraft- und formschlüssige Verbindung zwischen Wand 2 und Decke 3 zur Verfügung stellen. Die Decke 3 ist mit vier Scherentisch-Mechanismen 15 auf- und abfahrbar mit Stützen 19 verbunden, die unterhalb der oberen Abschlussplatte 8 des Aufliegers angeordnet sind. Zwischen benachbarten Paaren von Scherentisch-Mechanismen 15 sind zudem mehrere Öffnungen 6 zum Einführen von Flüssigkeiten 20 in den Tankraum in die Decke 3 eingebracht, über die Flüssigkeiten zumindest in Teilkompartimente des Tankraums, der vom Boden 1, der umlaufenden Wand 2 und der Decke 3 definiert ist, eingebracht werden können.

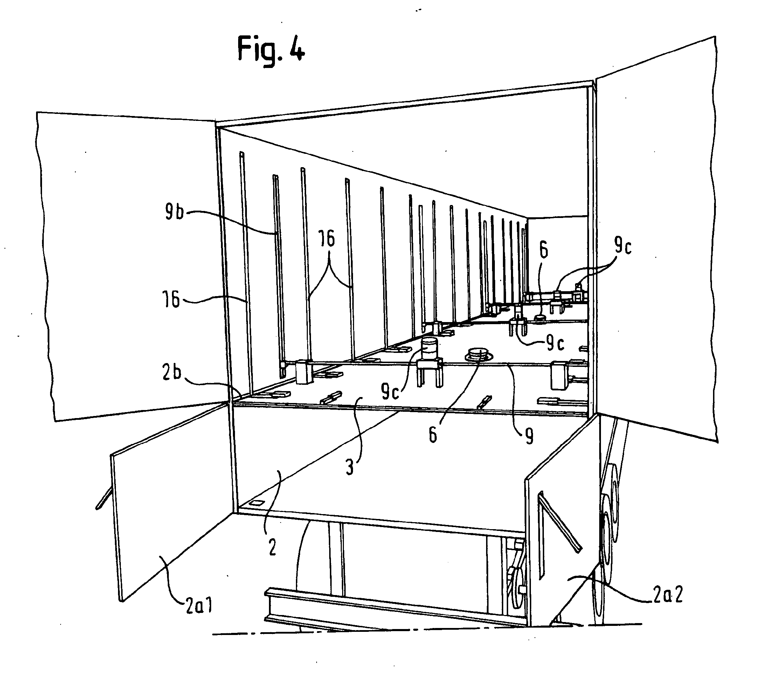

In Figur 4 wird eine zweite Ausführungsform eines erfindungsgemäßen flexiblen Laderaums dargestellt, bei der die Höhenverstellung der Decke 3 mittels eines Spindelantriebs 9 erfolgt. Mit der Decke 3 sind vier gleich zueinander beabstandete und mittels einer geeigneten Steuerung miteinander synchronisierte Antriebsmotoren 9c verbunden. Spindeln 9b sind parallel zu Führungsstangen 16 mit der Seitenwand 2 des Aufliegers verbunden und erstrecken sich nach unten bis zu einer umlaufenden Kante 2b, über die Spannhebel mittlerer Spannhebel-Mechanismen umgreift, um einen Kraftschluss zwischen Decke 3 und umlaufender Wand 2 zu bewirken. Der rückwärtige Teil 2a wird in dieser Ausführungsform von zwei Teiltüren 2a1 und 2a2 gebildet, wodurch ermöglicht wird, auch bei gefülltem Tank weiterhin Zugang zu dem Raum oberhalb des Lagerraums im Auflieger und zu den Tankstutzen oberhalb der Öffnungen 6 sowie zu den Antriebsmotoren 9c und den Spindelantrieben 9 insgesamt zu erhalten.

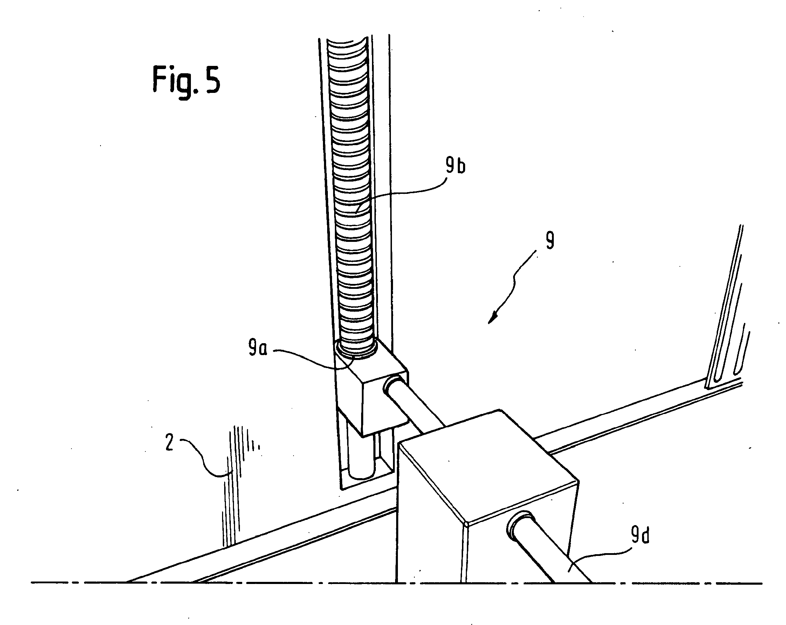

In Figur 5 wird eine Detailansicht eines der in Figur 4 dargestellten Spindelantriebe 9 dargestellt, wobei der Spindelantrieb 9 im Wesentlichen aus einer mit der Seitenwand 2 fixierten Spindel 9b und einer drehbar gelagerten Spindelmutter 9a besteht. Die Drehbewegung der Spindelmutter 9a wird über einen Antriebsstrang 9d vom (nicht dargestellten) Antriebsmotor auf die Spindelmutter 9a übertragen.

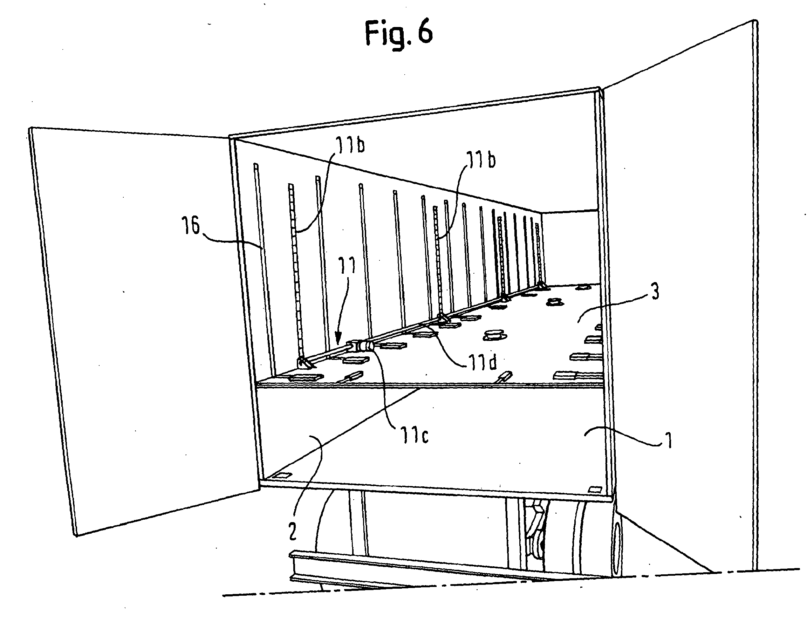

In Figur 6 wird eine dritte Ausführungsform eines erfindungsgemäßen Laderaums dargestellt, welche sich von der ersten und zweiten Ausführungsform im Wesentlichen dadurch unterscheidet, dass die Höhenverstellung der Decke 3 in Bezug auf den Boden 1 mittels eines Zahnradantriebs 11 erfolgt. Hierzu sind eine Reihe von Lochstangen 116 oder Zahnstangen fest und parallel zu den Führungsstangen 16 mit der Seitenwand 2 des Aufliegers verbunden. Eine Vielzahl von (nicht detailliert dargestellten) Zahnrädern wird mittels eines Antriebsmotors 11c und einer mit dem Antriebsmotor 11c verbundenen Antriebswelle 11d angetrieben und kämmt in der Loch- oder Zahnstange 11b, um so den Abstand der Decke 3 zum Boden 1 zu variieren.

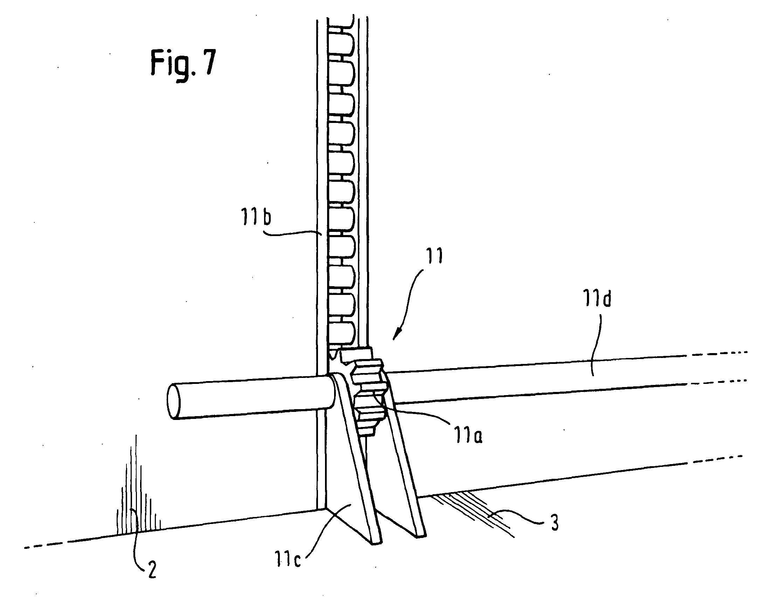

Figur 7 zeigt eine Detailansicht des Zahnradantriebs 11 gemäß der dritten Ausführungsform, bei dem ein Zahnrad 11a mittels eines von dem (nicht dargestellten) Antriebsmotor angetriebenen Antriebswelle 11d gedreht wird. Das Zahnrad 11a kämmt dann in der von der Antriebswelle 11d, mit der das Zahnrad 11a drehfest verbunden ist, vorgegebenen Richtung innerhalb der hier dargestellten Lochstange 11b und bewirkt somit ein Verfahren der mit der Zahnradstütze 11e fest verbundenen Decke 3 entlang der Wand 2 nach oben oder unten.

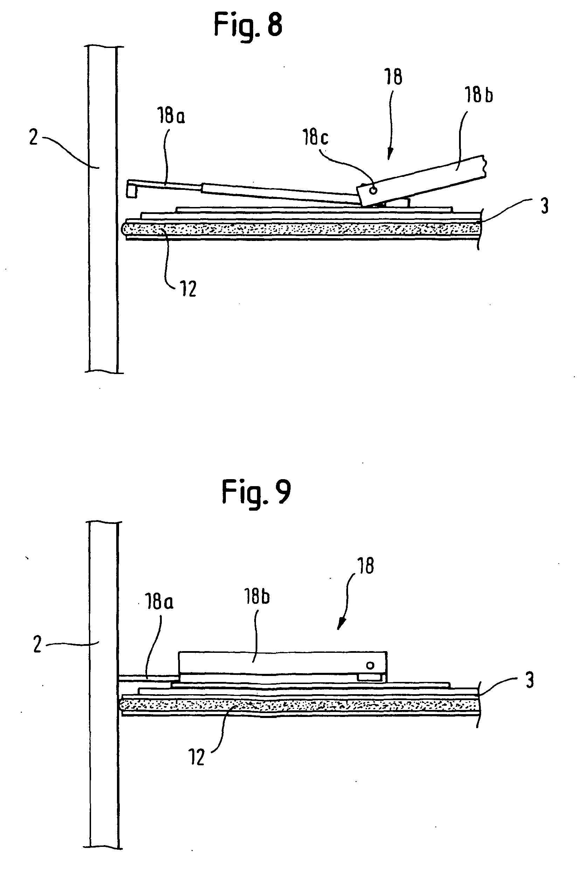

Figur 8 zeigt einen Spannhebelmechanismus 18 zur Verbindung der Decke 3 mit der umlaufenden Wand 2 eines Laderaums. Der Spannhebel-Mechanismus 18 besteht im Wesentlichen aus einem Spannhaken 18a, der in eine geeignete (nicht gezeigte) Ausnehmung innerhalb der Wand 2 eingreift oder aber die Wand 2 hintergreifen kann, und einem Spannhebel 18b, der mit dem Spannhaken 18a am Hebelpunkt 18c verbunden ist. Der Spannhebel 18b wird gelöst und gibt den Spannhaken 18a frei, so dass dieser hinter die Wand 2 greifen kann.

In Figur 9 wird die Verspannposition zwischen Decke 3 und Wand 2 dargestellt, wobei der Spannhebel 18b aus der in Figur 8 dargestellten Nicht-Verspann-Position um den Hebelpunkt 18c herum in die Spannposition verkippt wurde. Der SpannhebelMechanismus 18 bewirkt, dass der Spannhaken 18a die Wand 2 gegen die Decke 3 und insbesondere gegen die umlaufend in der Decke 3 angebrachte Dichtung 12 drückt, um somit einen Kraftund Formschluss zwischen Decke 3 und Wand 2 zu bewirken.

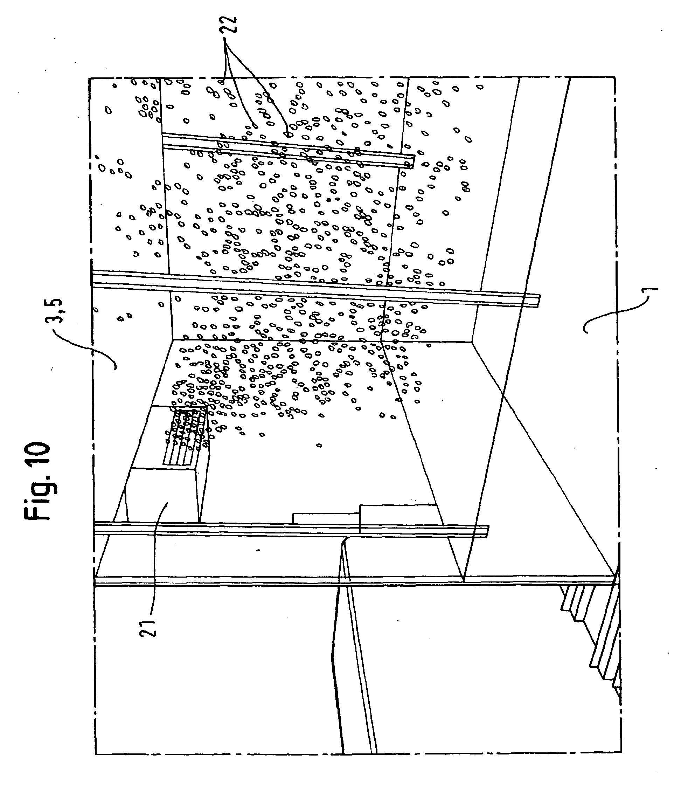

In Figur 10 ist die Anordnung eines Kühlsystems 21 an der Vorderseite eines Aufliegers für einen Lkw dargestellt, wobei dieses Kühlsystem 21 Luft von außen ansaugt, diese auf eine geeignete Temperatur abkühlt und gegebenenfalls den Gehalt der Luftfeuchtigkeit einstellt und die abgekühlte Luft, hier dargestellt durch eine Reihe blauer Kugeln 22, in den gesamten Laderaum hinein bläst. In dieser Ausgestaltungsform ist der Laderaum zum Transport von Stückgut mit in die obere Position 5 verschobener Decke 3 dargestellt. Die Kühlung erfolgt hierbei in einer generell üblichen Weise dadurch, dass die gekühlte Luft die im Laderaum auf dem Boden 1 abgestellte (hier nicht dargestellte) Stückgut-Ladung vollständig umströmen kann.

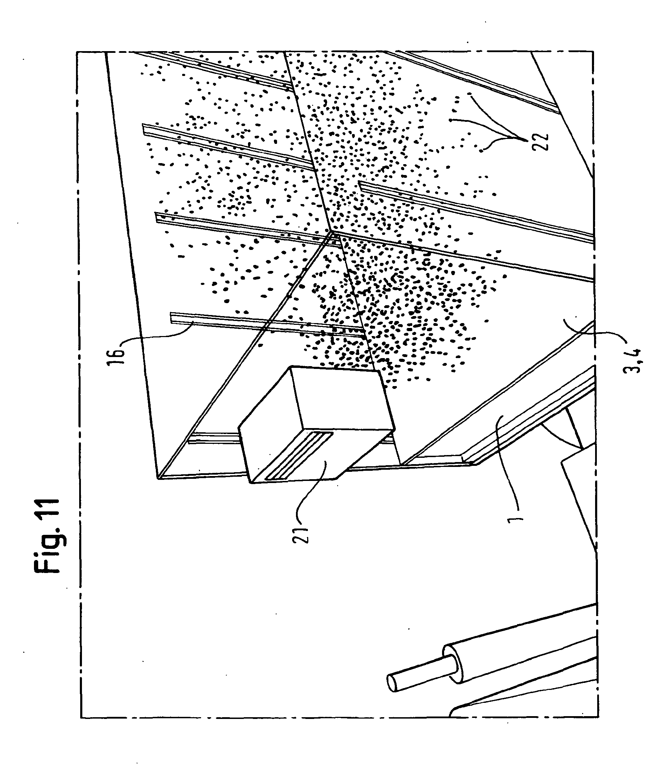

In Figur 11 ist das Kühlsystem 21 an der Vorderseite eines erfindungsgemäßen Laderaums angeordnet dargestellt, wobei in dieser Ausführungsform der Laderaum zum Transport von Flüssigkeiten dadurch vorgesehen ist, dass die Decke 3 entlang der Führungen 16 in ihre untere Position 4 in Richtung auf den Boden 1 hin verschoben wurde. Der Flüssigkeitstank wird somit von der Decke 3, der umlaufenden Wand 2 sowie dem Boden 1 ausgebildet. Die Kühlung des Tanks erfolgt nunmehr dadurch, dass die gekühlte Luft 22 in den Raum oberhalb der Decke 3 in ihrer unteren Position 4 eingeblasen wird und entlang der dem Tank abgewandten Seite der Decke 3 strömt.

## Patentansprüche

1. Laderaum zum Transport und/oder zur Lagerung von Waren, insbesondere zur Verwendung in oder an einem Kraftfahrzeug, vorzugsweise Laderaum eines Aufliegers für einen Lkw, umfassend einen Boden (1) sowie eine umlaufende und mit dem Boden (1) verbundene Wand (2), und eine Decke (3), welche zusammen den Laderaum definieren, wobei der Abstand zwischen dem Boden (1) und der Decke (3) zwischen wenigstens einer unteren Position (4) und einer oberen Position (5) veränderbar ist und
**dadurch gekennzeichnet, dass** die Decke (3) in wenigstens einer unteren Position (4) mit der Wand (2) kraft- und formschlüssig sowie flüssigkeitsdicht verbunden werden kann.

2. Laderaum gemäß Anspruch 1, **dadurch gekennzeichnet, dass** der Boden (1), die Wand (2) und die Decke (3) zumindest in der unteren Position (4) der Decke (3) in Bezug auf den Boden (1) einen Laderaum zum Speichern und/oder Transport wenigstens einer Flüssigkeit (20) ausbilden.

3. Laderaum gemäß einem der voranstehenden Ansprüche,
**dadurch gekennzeichnet, dass** zumindest ein Teil der umlaufenden Wand (2), insbesondere ein rückwärtiger Teil (2a) der Wand (2), verschwenkbar angebracht ist.

4. Laderaum gemäß einem der voranstehenden Ansprüche,
**dadurch gekennzeichnet, dass** der Laderaum insbesondere bei einer in der oberen Position (5) angeordneten Decke (3) zum Transport und/oder zur Lagerung von Stückgut verwendbar ist.

5. Laderaum gemäß einem der voranstehenden Ansprüche,
**dadurch gekennzeichnet, dass** der Kraft- und/oder Formschluss zwischen Wand (2) und Decke (3) über mit der Decke (3) verbundene Spannhebel (18), über die die Wand (2) mit der Decke (3) verspannt werden kann, erfolgt.

6. Laderaum gemäß einem der voranstehenden Ansprüche,
**dadurch gekennzeichnet, dass** die Decke (3) wenigstens eine verschließbare Öffnung (6) zur Einführung einer oder mehrerer Flüssigkeiten (20) in den Laderaum aufweist.

7. Laderaum gemäß einem der voranstehenden Ansprüche,
**dadurch gekennzeichnet, dass** der Boden (1) wenigstens eine verschließbare Öffnung (7) zum Ablassen von im Laderaum gespeicherter Flüssigkeit(en) (20) aufweist.

8. Laderaum gemäß einem der voranstehenden Ansprüche,
**dadurch gekennzeichnet, dass** die Decke (3) eine im Wesentlichen entlang der Seitenkanten umlaufend angeordnete und zur Wand (2) hin weisende Dichtung (12) aufweist.

9. Laderaum gemäß einem der voranstehenden Ansprüche,
**dadurch gekennzeichnet, dass** oberhalb der Decke (3) eine obere Abschlussplatte (8) angeordnet ist.

10. Laderaum gemäß Anspruch 8, **dadurch gekennzeichnet, dass** zwischen der oberen Abschlussplatte (8) und der Decke (3) wenigstens ein Scherentisch-Mechanismus (15) angeordnet ist, über den oder die der Abstand zwischen Boden (1) und Decke (3) veränderbar ist.

11. Laderaum gemäß einem der Ansprüche 1 bis 9, **dadurch gekennzeichnet, dass** der Abstand zwischen Boden (1) und Decke (3) mittels wenigstens eines Spindelantriebs (9), bei dem vorzugsweise mit der Decke (3) verbundene Spindelmuttern (9a) entlang von mit der Wand (2) verbundenen Spindeln (9b) zusammenwirken, veränderbar ist.

12. Laderaum gemäß einem der Ansprüche 1 bis 9, **dadurch gekennzeichnet, dass** der Abstand zwischen Boden (1) und Decke (3) mittels wenigstens eines Seilzugs veränderbar ist.

13. Laderaum gemäß einem der Ansprüche 1 bis 9, **dadurch gekennzeichnet, dass** der Abstand zwischen Boden (1) und Decke (3) mittels wenigstens eines Zahnradantriebs (11), bei dem vorzugsweise mit der Decke (3) verbundene Zahnräder (11a) mit mit der Wand (2) verbundenen Zahnoder Lochstangen (11b) kämmen, veränderbar ist.

14. Laderaum gemäß einem der voranstehenden Ansprüche, **dadurch gekennzeichnet, dass** der Abstand zwischen Boden (1) und Decke (3) elektrisch, pneumatisch oder hydraulisch unterstützt veränderbar ist.

15. Laderaum gemäß einem der voranstehenden Ansprüche, **dadurch gekennzeichnet, dass** ein Kühlsystem (21) mit dem Laderaum verbunden ist, über das ein Kühlmedium (22) in den Laderaum hinein und/oder an wenigstens einer Außenseite des Laderaums entlang, vorzugsweise der dem Laderaum abgewandten Seite der Decke (3), führbar ist.

## Claims

1. Load room for the transport and/or the storage of goods, in particular for use in or on a motor vehicle, preferably load room of a trailer for a heavy goods vehicle, comprising a base (1) and a surrounding wall (2) connected to the base (1), and a cover (3) which together define the load room, wherein the distance between the base (1) and the cover (3) can be altered between at least one lower position (4) and one upper position (5) and **characterised in that** the cover (3) in at least one lower position (4) may be connected to the wall (2) non-positively and positively as well as in liquid-tight manner.

2. Load room according to claim 1, **characterised in that** the base (1), the wall (2) and the cover (3) at least in the lower position (4) of the cover (3) with respect to the base (1) form a load room for the storage and/or transport of at least one liquid (20).

3. Load room according to one of the preceding claims, **characterised in that** at least some of the surrounding wall (2), in particular a back part (2a) of the wall (2), is attached to be pivotable.

4. Load room according to one of the preceding claims, **characterised in that** the load room, in particular in the case of a cover (3) arranged in the upper position (5), can be used for the transport and/or the storage of parcels.

5. Load room according to one of the preceding claims, **characterised in that** the non-positive and/or positive connection between wall (2) and cover (3) is effected via tension levers (18) connected to the cover (3) and by means of which the wall (2) may be braced to the cover (3).

6. Load room according to one of the preceding claims, **characterised in that** the cover (3) has at least one closable opening (6) for introducing one or more liquids (20) into the load room.

7. Load room according to one of the preceding claims, **characterised in that** the base (1) has at least one closable opening (7) for discharging liquid(s) (20) stored in the load room.

8. Load room according to one of the preceding claims, **characterised in that** the cover (3) has a seal (12) arranged to run essentially along the side edges and pointing towards the wall (2).

9. Load room according to one of the preceding claims, **characterised in that** an upper closure plate (8) is arranged above the cover (3).

10. Load room according to claim 8, **characterised in that** at least one scissor-table mechanism (15), by means of which the distance between base (1) and cover (3) can be altered, is arranged between the upper closure plate (8) and the cover (3).

11. Load room according to one of claims 1 to 9, **characterised in that** the distance between base (1) and cover (3) can be altered by means of at least one spindle drive (9), in which spindles nuts (9a) connected preferably to the cover (3) cooperate along from spindles (9b) connected to the wall (2).

12. Load room according to one of claims 1 to 9, **characterised in that** the distance between base (1) and cover (3) can be altered by means of at least one cable line.

13. Load room according to one of claims 1 to 9, **characterised in that** the distance between base (1) and cover (3) can be altered by means of at least one gearwheel drive (11), in which gearwheels (11a) connected preferably to the cover (3) mesh with toothed racks or holed racks (11b) connected to the wall (2).

14. Load room according to one of the preceding claims, **characterised in that** the distance between base (1) and cover (3) can be altered assisted electrically, pneumatically or hydraulically.

15. Load room according to one of the preceding claims, **characterised in that** a cooling system (21) is connected to the load room, by means of which a cooling medium (22) can be passed into the load room and/or along at least one outer side of the load room, preferably the side of the cover (3) facing away from the load room.

## Revendications

1. Espace de chargement pour le transport et/ou le stockage de marchandises, notamment pour une utilisation dans ou sur un véhicule automobile, de préférence espace de chargement d'un semi-remorque pour un camion, comprenant un plancher (1) ainsi qu'une paroi (2) périphérique et reliée au plancher (1) et un plafond (3), lesquels définissent conjointement l'espace de chargement, la distance entre le plancher (1) et le plafond (3) pouvant être changée entre au moins une position inférieure (4) et une position supérieure (5), **caractérisé en ce que** le plafond (3) dans au moins une position inférieure (4) peut être relié à la paroi (2) par concordance de force et de forme ainsi que de manière étanche aux liquides.

2. Espace de chargement selon la revendication 1, **caractérisé en ce que** le plancher (1), la paroi (2) et le plafond (3), au moins en position inférieure (4) du plafond (3) par rapport au plancher (1), forment un espace de chargement pour stocker et/ou transporter au moins un liquide (20).

3. Espace de chargement selon l'une des revendications précédentes, **caractérisé en ce qu'**au moins une partie de la paroi périphérique (2), en particulier une partie arrière (2a) de la paroi (2), est montée de manière à pouvoir pivoter.

4. Espace de chargement selon l'une des revendications précédentes, **caractérisé en ce que** l'espace de rangement, en particulier dans le cas d'un plafond (3) placé dans la position supérieure (5), est utilisable pour le transport et/ou le stockage de marchandises de détail.

5. Espace de chargement selon l'une des revendications précédentes, **caractérisé en ce que** la concordance de force et/ou de forme entre paroi (2) et plafond (3) s'effectue par l'intermédiaire de leviers de tension (18) reliés au plafond (3) et par l'intermédiaire desquels la paroi (2) peut être serrée contre le plafond (3).

6. Espace de chargement selon l'une des revendications précédentes, **caractérisé en ce que** le plafond (3) comporte au moins une ouverture (6) pouvant être fermée et pour l'introduction d'un ou plusieurs liquides (20) dans l'espace de chargement.

7. Espace de chargement selon l'une des revendications précédentes, **caractérisé en ce que** le plancher (1) comporte au moins une ouverture (7) pouvant être fermée et pour la sortie d'un/de liquide(s) (20) stocké(s) dans l'espace de chargement.

8. Espace de chargement selon l'une des revendications précédentes, **caractérisé en ce que** le plafond (3) comporte un joint d'étanchéité (12) agencé de manière périphérique essentiellement le long des arêtes latérales et pointant vers la paroi (2).

9. Espace de chargement selon l'une des revendications précédentes, **caractérisé en ce qu'**une plaque d'obturation supérieure (8) est agencée au-dessus du plafond (3).

10. Espace de chargement selon la revendication 8, **caractérisé en ce qu'**entre la plaque d'obturation supérieure (8) et le plafond (3) est agencé au moins un mécanisme de table à ciseaux (15) par l'intermédiaire duquel la distance entre le plancher (1) et le plafond (3) peut être changée.

11. Espace de chargement selon l'une des revendications 1 à 9, **caractérisé en ce que** la distance entre plancher (1) et plafond (3) peut être changée au moyen d'au moins une commande à broches (9) telle que de préférence des écrous de broches (9a) reliés au plafond (3) coopèrent le long de broches (9b) reliées à la paroi (2).

12. Espace de chargement selon l'une des revendications 1 à 9, **caractérisé en ce que** la distance entre plancher (1) et plafond (3) peut être changée au moyen d'au moins un tirant à câble.

13. Espace de chargement selon l'une des revendications 1 à 9, **caractérisé en ce que** la distance entre plancher (1) et plafond (3) peut être changée au moyen d'au moins une commande à engrenages (11) telle que de préférence des roues dentées (11a) reliées au plafond (3) s'engrènent dans des crémaillères ou barres perforées (11b) reliées à la paroi (2).

14. Espace de chargement selon l'une des revendications précédentes, **caractérisé en ce que** la distance entre plancher (1) et plafond (3) peut être changée de façon électrique, pneumatique ou hydraulique.

15. Espace de chargement selon l'une des revendications précédentes, **caractérisé en ce qu'**un système de refroidissement (21) est relié à l'espace de chargement, par l'intermédiaire duquel un fluide de refroidissement (22) peut être guidé vers l'intérieur de l'espace de chargement et/ou le long d'au moins un côté extérieur de l'espace de chargement, de préférence le côté du plafond (3) à l'opposé de l'espace de chargement.
